# EUROPEAN PATENT APPLICATION

(11) **EP 1 881 683 A1**
(43) Date of publication of application: **23.01.2008**
(21) Application number: 07012450.8
(22) Date of filing: 26.06.2007
(51) Int. Cl.: H04M 1/725, H04N 7/14

(54) **Screen display method and apparatus for mobile device**

(30) Priority: 30.06.2006 KR 20060061123
(71) Applicant: Samsung Electronics Co., Ltd., Suwon-si, Gyeonggi-Do (KR)
(72) Inventor: Jung, Mal Nam, Suwon-si, Gyeonggi-do (KR); Kim, Kang Wook, Suwon-si, Gyeonggi-do (KR)
(74) Representative: Lang, Johannes

(57) **Abstract**

A screen display apparatus for a mobile device includes a broadcasting reception unit to receive digital broadcasting, and a radio frequency unit to connect a video call. The apparatus further includes a display unit to display at least one of a broadcasting screen and a video call screen, and a control unit to control the display unit to simultaneously display the broadcasting screen and the video call screen when the video call is connected through the radio frequency unit while the digital broadcasting is being received through the broadcasting reception unit.

## Description

### BACKGROUND OF THE INVENTION

### Filed of the invention

The present invention relates to screen display technology using a mobile device and, more particularly, to a method and an apparatus for displaying a screen of a mobile device while simultaneously receiving digital broadcasting and a video call.

### Discussion of the Background

In general when watching digital broadcasting, such as digital multimedia broadcasting (DMB), digital video broadcasting handheld (DVB-H), etc., using a mobile device, a user may wish to use several functions of the mobile device at the same time. For example, while receiving digital broadcasting, a user may wish to also perform a voice call or use a short message service (SMS), a multimedia message service (MMS), etc.

Particularly, since video calling has become available with the advent of a display phone, a way to simultaneously process video call data and digital broadcasting data is desired. That is, a mobile device should be able to multi-task and allow a video call to be performed without ceasing digital broadcasting reception. It is important not only to maintain the continuity of a unidirectional broadcasting service, but also to enhance the functionality of a video call.

However, a current mobile device having both a video calling and digital broadcasting capabilities may fail to offer a screen that simultaneously displays both a video call and digital broadcasting. Therefore, in order to dial or answer a video call while receiving digital broadcasting, a conventional mobile device may need to terminate a broadcasting display screen that is in progress.

### SUMMARY OF THE INVENTION

The present invention provides a method and an apparatus that may allow a screen of a mobile device to simultaneously display digital broadcasting and a video call.

Additional features of the invention will be set forth in the description which follows, and in part will be apparent from the description, or may be learned by practice of the invention.

The present invention discloses a method for displaying a screen in a mobile device including displaying a broadcasting screen and a video call screen simultaneously when a video call is connected during the digital broadcasting.

The present invention also discloses a screen display apparatus for a mobile device including a broadcasting reception unit to receive digital broadcasting, a radio frequency unit to connect a video call, a display unit to display at least one of a broadcasting screen and a video call screen, and a control unit to control the display unit to simultaneously display the broadcasting screen and the video call screen when a video call is connected through the radio frequency unit while the broadcasting reception unit receives digital broadcasting.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
- FIG. 1: is a block diagram showing a mobile device in accordance with an exemplary embodiment of the present invention.
- FIG. 2A, FIG. 2B, FIG. 2C, and FIG. 2D: are screen views showing a screen display method for a mobile device in accordance with an exemplary embodiment of the present invention.
- FIG. 3: is a flow chart diagram showing a screen display method for a mobile device in accordance with an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. Like reference numerals in the drawings denote like elements.

Hereinafter, well-known structures and processes may be not described or shown in detail to avoid obscuring the essence of the present invention. Although the following exemplary embodiments employ a mobile phone having a camera function, the present invention is not limited thereto. The mobile device according to the present invention may be any kind of device that provides for video calling and digital broadcasting, such as a mobile communication terminal, a cellular phone, a personal digital assistant (PDA), a smart phone, an international mobile telecommunication 2000 (IMT-2000) terminal, a universal mobile telecommunication service (UMTS) terminal, a digital broadcasting terminal, a notebook computer, a personal computer, or any other suitable devices.

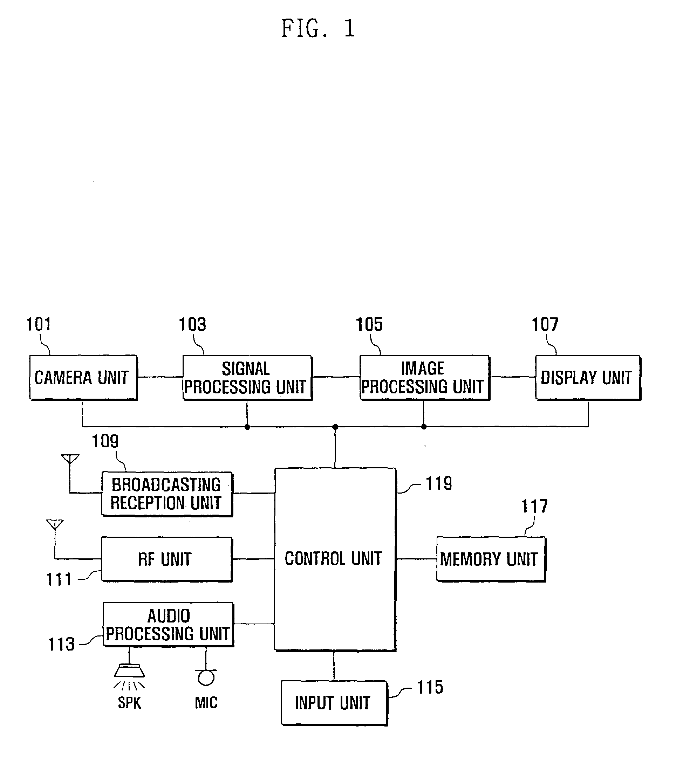

FIG. 1 shows, in a block diagram, a mobile device in accordance with an exemplary embodiment of the present invention.

Referring to FIG. 1, the mobile device includes a camera unit 101, a signal processing unit 103, an image processing unit 105, a display unit 107, a broadcasting reception unit 109, a radio frequency (RF) unit 111, an audio processing unit 113, an input unit 115, a memory unit 117, and a control unit 119.

The camera unit 101 includes at least one camera lens that collects rays of light from an object being photographed, and a camera sensor that converts optical signals into electrical signals. The camera sensor may be a charge coupled device (CCD) sensor or a complementary metal oxide semiconductor (CMOS) sensor.

The signal processing unit 103 includes a signal processor to convert analog image signals captured by the camera sensor into digital image signals. The signal processor may be, for example, a digital signal processor (DSP).

The image processing unit 105 generates image data to display digital image signals that the signal processing unit 103 outputs. Specifically, the image processing unit 105 processes image signals by frame units and then outputs processed image signals, i.e., frame data, to match the display characteristics and size of the display unit 107. Additionally, the image processing unit 105 not only transmits image signals received from the camera unit 101 to the display unit 107, but also sends image signals received under control of the control unit 119 to the display unit 107. The image processing unit 105 includes an image codec to compress image signals to be displayed on the display unit 107 and also to decompress compressed image signals into original image signals. The image codec may be a joint pictures experts group (JPEG) codec, a moving pictures experts group (MPEG) codec, or a Wavelet codec.

The display unit 107 displays, on a screen, image data output by the image processing unit 105. Additionally, the display unit 107 visually represents information, for example, the display unit 107 may display a menu of the mobile device, a user's input data, function setting information, etc. In particular, the display unit 107 may simultaneously display a broadcasting screen and a video call screen when a video call is connected through the RF unit 111 while receiving digital broadcasting through the broadcasting reception unit 109. The display unit 107 may be a liquid crystal display (LCD), an organic light-emitting diode (OLED), or another alternative display device. The display unit 107 may be a touch-screen device, which performs some or all of the functions of the input unit 115.

The broadcasting reception unit 109 receives digital broadcasting. Specifically, the broadcasting reception unit 109 may include a tuner that allows for broadcasting signals to be selectively received through a physical channel with a specific frequency. The broadcasting reception unit 109 may further include a demodulator that demodulates the received broadcasting signals into transport streams (TS). Additionally, the broadcasting reception unit 109 may output transport streams to the control unit 119. Transport streams may be MPEG2-TS.

The RF unit 111 performs normal wireless communication by sending and receiving voice call signals or message signals to and from other mobile device. The RF unit 111 includes an RF transmitter that up-converts the frequency of signals being transmitted and amplifies the signals, and an RF receiver that low-noise amplifies signals being received and down-converts the frequency thereof. The RF unit 111 converts modulated signals received from the control unit 119 into intermediate frequency (IF) signals, converts again them into RF signals, and then transmits them to a base station through an antenna. Additionally, the RF unit 111 receives RF signals from the base station through the antenna, sequentially converts them into IF signals and baseband signals, and offers them to the control unit 119.

The audio processing unit 113 reproduces audio signals the control unit 119 outputs and transmits audio signals, such as voice input from a microphone MIC, to the control unit 119. Specifically, the audio processing unit 113 converts analog audio signals received from the microphone into digital signals, i.e., pulse code modulation (PCM) signals, and then sends them to the control unit 119. Additionally, the audio processing unit 113 converts PCM signals received from the control unit 119 into audible analog audio signals, and then sends them to a speaker SPK. Particularly, the audio processing unit 113 selectively outputs, through the speaker, one of an audio of a digital broadcasting and an audio of a video call. For example, the audio processing unit 113 may selectively output audio of a video call when a broadcasting screen and a video call screen are simultaneously displayed on the display unit 107.

The input unit 115 may be formed of a typical keypad that includes alphanumeric keys, function keys, navigation keys, side keys, and shortcut keys. Also the input unit 115 may be formed of pointing devices such as a touchpad, a trackball, an optical jog, or other alternative input devices. The input unit 115 sends a user's input signals to the control unit 119.

The memory unit 117 stores application programs required for operation of the mobile device. The memory unit 117 also stores downloaded data and user created data. The memory unit 117 may include a program region and a data region. The program region stores an operating system (OS) to boot the mobile device, and various application programs required to execute multimedia functions such as digital broadcasting reception and display, video calling, etc. When receiving a user's request to enable such a function, the memory unit 117 offers a requested function through a corresponding application program under control of the control unit 119. The data region may store a user's data, such as music files, still images, motion pictures, etc., created during the execution of application programs. The memory unit 117 may further include at least one buffer to temporarily store such data.

The control unit 119 controls the operation of the mobile device and also controls the transfer of signals between internal blocks of the mobile device. Specifically, the control unit 119 executes functions in the mobile device according to input signals of the input unit 115, and also displays information according to such execution of functions in the display unit 107.

Especially, the control unit 119 converts and modulates PCM voice signals received from the audio processing unit 113 through channel coding and interleaving, and then offers them to the RF unit 111. Additionally, the control unit 119 generates PCM voice signals by demodulating, equalizing, channel-decoding, and deinterleaving voice signals received from the RF unit 111, and then sends them to the audio processing unit 113. The control unit 119 may include a modem and a codec to perform these functions. Here, the codec may include a data codec, an audio codec, and a video codec. The control unit 119 may further include a demultiplexer to demultiplex transport streams received from the broadcasting reception unit 109 into video streams, audio streams, and data streams.

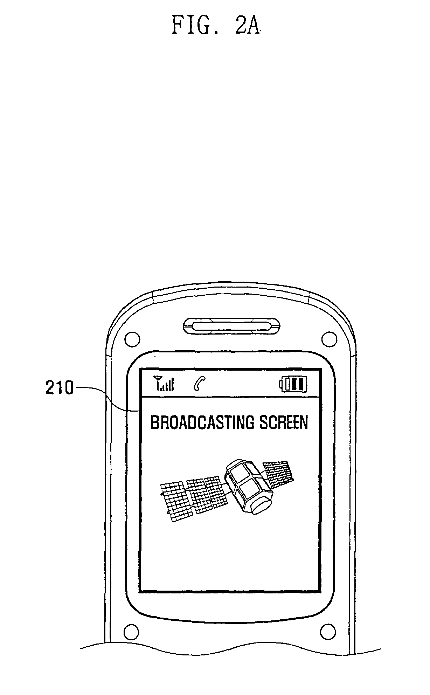

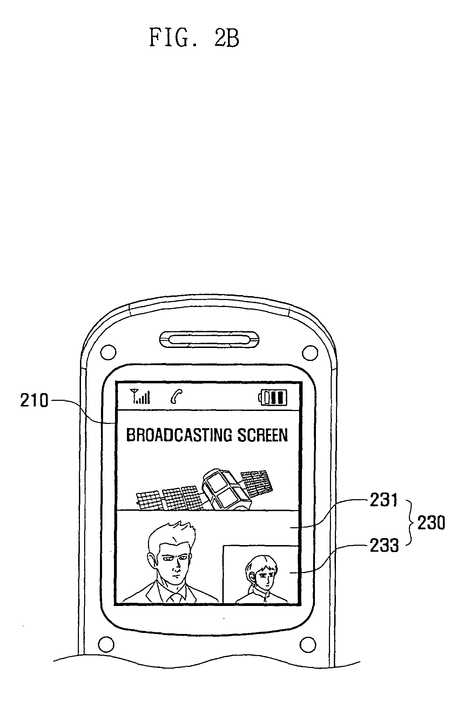

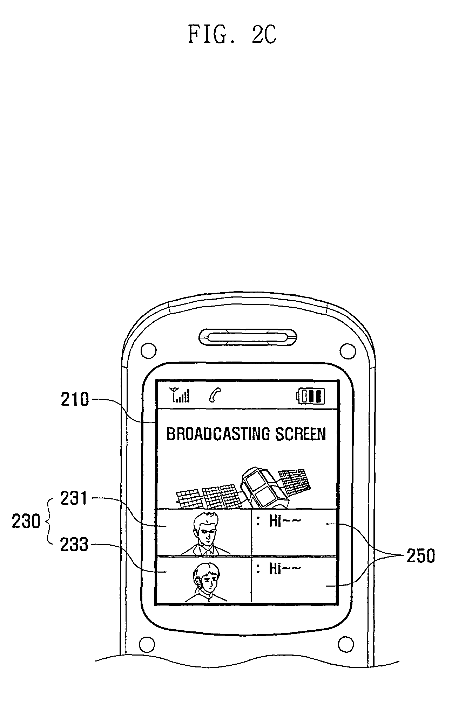

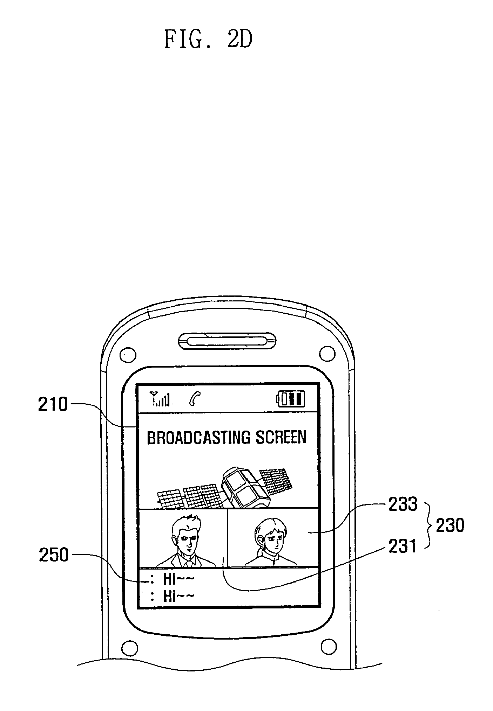

FIG. 2A, FIG. 2B, FIG. 2C, and FIG. 2D are screen views showing a screen display method for a mobile device in accordance with an exemplary embodiment of the present invention. Specifically, FIG. 2A shows an example of a digital broadcasting screen. Additionally, FIG. 2B, FIG. 2C, and FIG. 2D respectively show screens in which a video call is connected while receiving digital broadcasting. Especially, FIG. 2C and FIG. 2D represent a text chatting mode.

As shown in FIG. 1 and FIG. 2A, the control unit 119 plays a digital broadcasting through the display unit 107 in a digital broadcasting mode. For the convenience of explanation, a screen shown in FIG. 2A will be referred to as a broadcasting screen 210.

Referring to FIG. 1 and FIG. 2B, when a video call is connected during the display of digital broadcasting, the control unit 119 simultaneously displays the broadcasting screen 210 and a video call screen 230 through the display unit 107. Although the broadcasting screen 210 and the video call screen 230 are arranged respectively at upper and lower parts of the display unit 107, such an arrangement is exemplary only and the present invention is not limited thereto. Additionally, the broadcasting screen 210 and the video call screen 230 may be the same size or may be different sizes.

The video call screen 230 may have two sub-screens, i.e., a counterpart sub-screen 231 and a user sub-screen 233. These sub-screens 231 and 233 may be obtained respectively by the camera units of both mobile devices involved in a video call. The video call screen 230 generally includes the counterpart sub-screen 231, and the user sub-screen 233 may be optionally provided. A picture-in-picture (PIP) technique may be used to simultaneously display two sub-screens 231 and 233.

The control unit 119 may resize the screen to adjust the sizes of the broadcasting screen 210, the counterpart sub-screen 231, and the user sub-screen 233 according to a user's request. It is also possible for the control unit 119 to arrange such screens. While FIG. 2B shows a relatively small sub-screen 233 displayed in a relatively large sub-screen 231, FIG. 2C and FIG. 2D show sub-screens 231 and 233 of the same size. As shown in FIG. 2C and FIG. 2D, the sub-screens 231 and 233 may be arranged horizontally or vertically.

Referring to FIG. 1, FIG. 2C, and FIG. 2D, when an input signal for entering a text chatting mode is received when the broadcasting screen 210 and the video call screen 230 are simultaneously displayed, the control unit 119 controls the display unit 107 to further display a video chatting window 250. Therefore, a user may use what is referred to as video chatting while watching digital broadcasting.

As discussed heretofore, the present invention allows a display screen to be divided so as to display a video call screen 230 or a video chatting window 250 while digital broadcasting is being received and displayed. Hereinafter, a method for displaying a screen according to the present invention will be described in detail through an exemplary embodiment.

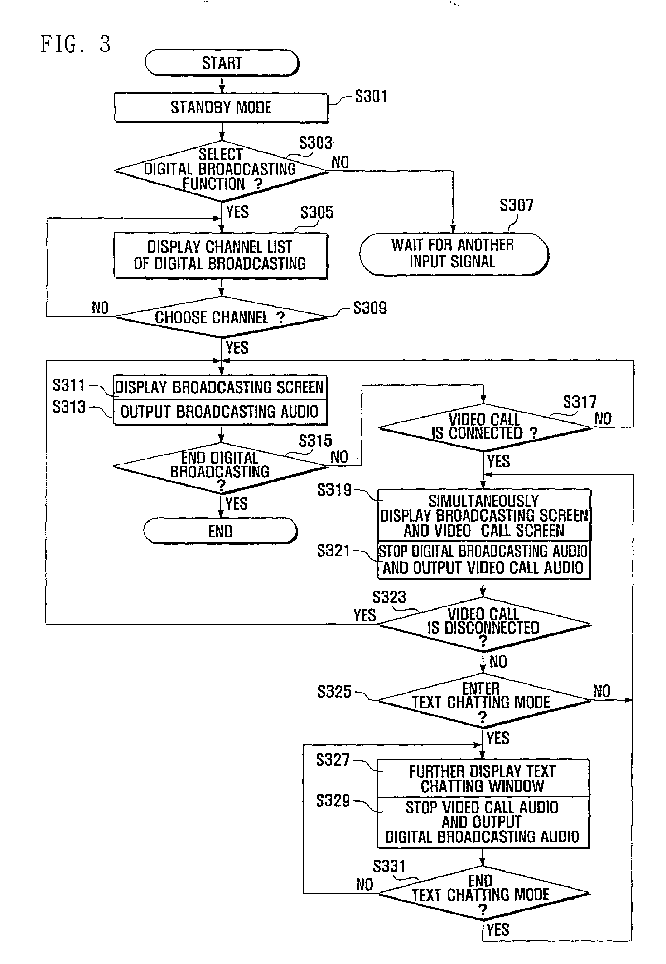

FIG. 3 is a flow chart diagram showing a screen display method for a mobile device in accordance with an exemplary embodiment of the present invention. Here, it is assumed that the broadcasting reception unit 109 is powered on and is continuously receiving digital broadcasting signals.

Referring to FIG. 1 and FIG. 3, the control unit 119 executes a standby mode in step S301. Then in step S303 the control unit 119 determines whether there is an input signal selecting a digital broadcasting function. If a digital broadcasting function is selected, the control unit 119 controls the display unit 107 to display a channel list of a digital broadcasting in step S305. Otherwise, the control unit 119 waits for another input signal in step S307.

A user may choose a desired broadcasting channel from the displayed channel list. In step S309, the control unit 119 determines whether a channel has been selected. If a channel is not selected, the control unit 119 returns to step 305 and continues to display a channel list of digital broadcasting. If a channel has been selected, the control unit 119 displays video corresponding to the selected channel through the display unit 107 in step S311 and, at the same time, plays audio of the selected channel through the speaker SPK in step S313.

Both steps S311 and S313 are simultaneously performed to display contents of a broadcasting channel selected by a user. Here, the control unit 119 synchronizes the video and audio of a digital broadcasting channel. FIG. 2A is an example view showing a screen displaying the contents of a selected broadcasting channel.

Thereafter, the control unit 119 determines whether a signal to end digital broadcasting has been input in step S315. If a signal to end has been input, the control unit 119 ends digital broadcasting. Otherwise, the control unit 119 determines whether a video call has been connected in step S317.

When a video call has been connected, in step S319 the control unit 119 controls the display unit 107 to simultaneously display a broadcasting screen 210 and a video call screen 230 as shown in FIG. 2B. Otherwise, the control unit 119 returns to steps S311 and S313 to continue playing a digital broadcasting only. Connection of a video call includes transmitting an outgoing video call and receiving an incoming video call.

In step S321, the control unit 119 stops the output of an audio of a digital broadcasting and instead, outputs audio of a video call, namely, an incoming voice of a video call. Both steps S319 and S321 may be simultaneously performed. Therefore, a user may use a video call through a video call screen 230 while watching digital broadcasting through a broadcasting screen 210.

During a video call, the control unit 119 determines whether a video call is disconnected in step S323. When a video call is disconnected, the control unit 119 returns to steps S311 and S313 and continues displaying digital broadcasting only. Otherwise, the control unit 119 determines whether a signal to enter a text chatting mode has been input in step S325.

When a signal for a text chatting mode is input, the control unit 119 controls the display unit 107 to further display a text chatting window 250 (S327) as shown in FIG. 2C and FIG. 2D. As a result, the video call screen 230 is composed of the counterpart sub-screen 231, the user sub-screen 233, and the text chatting window 250.

Together with further displaying the text chatting window 250, in step S329 the control unit 119 stops the output of the audio of a video call and instead outputs the audio of the digital broadcasting. Therefore, a user may use video chatting while watching digital broadcasting. Here, the text chatting window 250 may be displayed on a counterpart's device as well as on a user's device.

If a signal for a text chatting mode is not input in step S325, the control unit 119 returns to steps S319 and S321 and continues simultaneously displaying a broadcasting screen 210 and a video call screen 230.

Next, the control unit 119 determines whether a signal to end a text chatting mode has been input in step S331. If a signal to end has been input, the control unit 119 returns to steps S319 and S321. Otherwise, the control unit 119 continues performing steps S327 and S329.

As discussed above, the present invention may allow digital broadcasting and video calling to be used simultaneously in a mobile device. That is, the present invention enables a mobile device to execute a video call without ceasing digital broadcasting reception. Moreover, the present invention allows a digital broadcasting screen and a video call screen to be simultaneously displayed in a mobile device.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A method for displaying a screen in a mobile device, comprising:
displaying a broadcasting screen and a video call screen simultaneously when a video call is connected while the digital broadcasting is displayed.

2. The method of claim 1, further comprising:
stopping the output of audio of the digital broadcasting and at the same time outputting audio of the video call.

3. The method of claim 2, further comprising:
displaying a text chatting window in the video call screen in response to an input signal to enter a text chatting mode.

4. The method of claim 3, further comprising:
stopping the output of the audio of the video call and at the same time outputting the audio of the digital broadcasting.

5. The method of claim 3, wherein the video call screen comprises at least one of a counterpart sub-screen and a user sub-screen.

6. The method of claim 5, wherein the video call screen comprises both the counterpart sub-screen and the user sub-screen, and a relatively small sub-screen of both sub-screens is displayed in a relatively large sub-screen of both sub-screens.

7. The method of claim 5, wherein the video call screen comprises both the counterpart sub-screen and the user sub-screen, and both sub-screens are the same size.

8. The method of claim 2, wherein the audio of the video call is an incoming voice of the video call.

9. The method of claim 1, wherein the broadcasting screen and the video call screen have the same sizes.

10. The method of claim 1, wherein the broadcasting screen and the video call screen have different sizes.

11. A screen display apparatus for a mobile device, the apparatus comprising:
a broadcasting reception unit to receive a digital broadcasting;
a radio frequency unit to connect a video call;
a display unit to display at least one of a broadcasting screen and a video call screen; and
a control unit to control the display unit to simultaneously display the broadcasting screen and the video call screen when the video call is connected through the radio frequency unit while the digital broadcasting is being received through the broadcasting reception unit.

12. The apparatus of claim 11, further comprising:
an audio processing unit to selectively output audio of the digital broadcasting or audio of the video call through a speaker.

13. The apparatus of claim 12, wherein the audio processing unit selectively outputs the audio of the video call when the broadcasting screen and the video call screen are simultaneously displayed on the display unit.

14. The apparatus of claim 12, wherein the control unit controls the display unit to further display a text chatting window in the video call screen in response to an input signal to enter a text chatting mode.

15. The apparatus of claim 14, the audio processing unit selectively outputs the audio of the digital broadcasting when the text chatting window is further displayed on the display unit.

16. The apparatus of claim 11, wherein the video call screen comprises at least one of a counterpart sub-screen and a user sub-screen.

17. The apparatus of claim 16, wherein the video call screen comprises both the counterpart sub-screen and the user sub-screen, and a relatively small sub-screen of both sub-screens is displayed in a relatively large sub-screen of both sub-screens.

18. The apparatus of claim 16, wherein the video call screen comprises both the counterpart sub-screen and the user sub-screen, and both sub-screens are the same size.
